# EUROPEAN PATENT SPECIFICATION

(11) **EP 3 657 057 B1**
(45) Date of publication and mention of the grant of the patent: **03.01.2024**
(21) Application number: 19209671.7
(22) Date of filing: 18.11.2019
(51) Int. Cl.: F16L 3/10, H02G 3/32, B64C 1/40

(54) **EASY LOCK P-CLAMP**
P-KLEMME MIT EINFACHER VERRIEGELUNG
AGRAFE P À VERROUILLAGE FACILE

(30) Priority: 20.11.2018 US 201816196532
(43) Date of publication of application: 27.05.2020
(73) Proprietor: The Boeing Company, Arlington, VA 22202 (US)
(72) Inventor: KIM, Jin Heung, Chicago, IL 60606-2016 (US); SEO, Jin-Seog, Chicago, IL 60606-2016 (US)
(74) Representative: Boult Wade Tennant LLP

(56) References cited:
- EP-A1- 2 813 713
- EP-A1- 3 517 814
- EP-A2- 2 398 122
- WO-A1-2011/018605
- CN-B- 101 344 190
- DE-U1- 20 306 224
- FR-A1- 2 936 037
- JP-A- H11 287 360
- US-A1- 2009 230 627
- US-A1- 2014 091 182
- US-A1- 2015 053 477

## Description

### BACKGROUND

This disclosure relates to a clamp assembly and more particularly to a clamp assembly which secures wire bundles to a structure.

Clamp assemblies are used to capture bundles of wires for the purpose of securing bundles of wires to a structure and routing the bundles of wires with respect to the structure. The structure can be associated with the fabrication of assembly, which requires transmission of communication and/or control signals to different locations within the assembly. Such transmission of communication and/or control signals are required for example in the operation of an aircraft and therefore the securement and routing of bundles of wires is essential in the fabrication of the aircraft. Securement and routing of bundles of wires in assembling an aircraft can be time consuming and costly.

During the fabrication process of an assembly, such as aircraft, there is a need for the installer to secure and route bundles of wires through various confinements within the aircraft and to do so in a time efficient and ergonomically beneficial manner. For example, to be able to open and close clamp assemblies by hand, can provide the installer a savings in time and cost in not having to use a tool to accomplish the opening and closing the clamp assembly during fabrication. With being able to open and close a clamp assembly by hand, an installer can also have additional ergonomic choices in which to accomplish that task. Trying to utilizing a tool within a confined space, can limit the ergonomic choices for the installer. In addition, with eliminating a need for the use of a tool to open and close the clamp assembly during fabrication, less labor time will be required which will result in cost savings for the fabrication of the aircraft.

In addition, there is consistent need to provide a reliable securement between a strap and a body of the clamp assembly for confinement of bundled wires with the bundled wires in operation. In addition, there is a need to provide additional radial reinforcement and lateral reinforcement with respect to the strap and the body of the clamp assembly so as to prevent relative radial and/or lateral movement between the strap and the body in capturing a wire bundle and with locking the clamp assembly. The reinforcement in a radial direction with respect to the captured bundled wires and reinforcement in a lateral direction, in a direction in which the bundled wires extend, assist in maintaining a desired opening shape between the strap and the body of the clamp assembly. Maintaining the desired shape between the strap and the body facilitate the installation of the wire bundles to comply with wiring standards and regulations for wiring within, for example, an aircraft structure. The maintenance of shape of the opening between the strap and the body of the clamp assemblies with captured bundled wires positioned within the clamp assembly, provides for optimization in meeting wiring requirements and thereby reduces occurrences and costs associated with reworking of wire bundle installations.

US-A1-2014/091182, in accordance with its abstract, states a clamp for attaching a pipe with a narrow width portion to a support member, includes a first member including a first concave portion adapted to be connected to the support member; and a second member whose base end is hinge-connected to the first member and whose front end is selectively engaged with the first member. The second member includes a second concave portion facing the first concave portion and defines a housing portion receiving the narrow portion together with the first concave portion in a state wherein the front end is engaged with the first member. The first concave portion and the second concave portion support the narrow portion in a posture wherein the first radial direction is orthogonal to a direction in which the first member and the second member face each other, and abut against a portion in the first radial direction of the narrow portion.

DE-U1-20306224, in accordance with its abstract, states a device for releasably holding tubular components comprises a main body with a space for a tubular component, and a pivotable bracket whose free end releasably engages with a fixing point of the main body.

CN-B-101344190, in accordance with its abstract, states a bracket-typed bandage which comprises a bandage body; the two ends of the bandage body are respectively provided with a card tongue and a card slot which has a top plate and a bottom plate; the space between the top plate and the bottom plate forms an opening facing the card tongue which can be inserted into the opening of the card slot so as to lead the bandage body to form a sealing ring; the end of the top plate facing the card tongue is provided with a wrench holding part for hand holding; by wrenching the wrench holding part along the direction which is perpendicular to the top plate and far from the bottom plate, the top plate and the wrench holding part move as a whole so as to lead the opening to stretch facing the card tongue; in addition, the outer profile line of the arbitrary cross section of the bandage body, which is perpendicular to the enclosed ring center axis, is continuous, while the outer periphery and the inner periphery of the arbitrary cross section, which are parallel to the enclosed ring center axis, only consist of a straight line and/or a convex part.

EP-A1-3517814, which is citeable for novelty only under Article 54(3) EPC, in accordance with its abstract, states a clamp assembly for securing wire bundles to a structure includes a body having a first portion having a first side and a second portion having a second side which extends in a curvilinear direction between a first end and a second end. The assembly further includes one of a hinge pin or hinge flange is associated with the first end of the second portion and a latch member connected to the body. The latch member extends in a direction away from the second end of the second portion with a termination edge positioned spaced apart from the second end of the second portion and the termination edge extends in a direction in angular relationship to the curvilinear direction of the second side. A strap member is included having the other of the one of the hinge pin or the hinge flange and an end portion which engages the latch member.

WO-A1-2011/018605, in accordance with its abstract, states a conduit attachment comprising a ring member adapted to be placed over a conduit, said ring member having a through axis and a circumferential radially external surface, said surface having axially spaced shoulders thereon to define a substantially circular arcuate track in the circumference direction, said track being adapted to receive a cable tie. The ring member is split to allow opening and closing thereof and comprises semi-circular ring portions which are connected by a living hinge, said ring member includes a releasable latch engageable in the closed condition thereof and further including restraining portion for engagement with a mounting substrate.

FR-A1-2936037, in accordance with its abstract, states a device having a clip for slidably receiving a toothed piece and equipped with a pin receiving base, where the clip is in the form of a hollow cylinder. A pin has an arc shaped locking end dimensioned for being passed through an opening of the clip. A locking frame locks the pin in the clip. The cylinder comprises two semicylindrical parts connected by a hinge and equipped with closing units.

US-A1-2009/230627, in accordance with its abstract, states a sealing member and a preemptive system and a preemptive method of preventing or stopping a primary joint leak between a pipe and a pipe fitting by securing a sealing ring to the pipe and the pipe fitting to form a secondary joint that inhibits or prevent leakage between the primary joint between the pipe and the pipe fitting.

US-A1-2015/053477, in accordance with its abstract, states a split, non-metallic electrical insulating bushing for placement on a terminating end of an electrical conduit, the bushing rotatable between a first open configuration and a second closed configuration and having first and second hemispherically shaped bushing portions. Both bushing portions have a first end and a second end. The first ends are dimensioned to rotate with respect to each other. The second end of the first bushing portion includes a bore for receipt of a fastener, while the second end of the second bushing portion includes an aperture dimensioned for receipt of the fastener. The second end of the first insulating portion has a projecting pin and the second end of the second insulating portion has an orifice dimensioned for receipt of the projecting pin.

### SUMMARY

There is described herein a clamp assembly for securing wire bundles to a structure, comprising: a body comprising: a first end portion of the body; and a second end portion of the body having a ramp assembly having a surface comprising two spaced apart tab extensions defining a latch wall portion, wherein the second end portion of the body defines: a slot; and a tab; and a strap comprising: a first end portion of the strap, wherein the first end portion of the strap is pivotally coupled to the first end portion of the body to form a hinge with an axis of rotation about which the body and the strap rotate relative to one another, wherein the first end portion of the strap defines: a projection; and a slot, with a first wall portion of the first end portion of the strap and a second wall portion of the first end portion of the strap spaced apart from one another in a direction transverse to a radial direction extending from a central axis which extends between the strap and the body; and a second end portion of the strap having: a leg member and a head with the leg member connecting the head to the first end portion of the strap, wherein the leg member has a width dimension less than a width dimension of the first end portion of the strap and less than a width dimension of the head; and a locking wall portion defined by the head and extending in a direction away from the leg member, wherein: the slot defined by the second end portion of the body is defined by a first wall portion of the second end portion of the body positioned at a first radial distance from the axis of rotation and a second wall portion of the second end portion of the body positioned at a second radial distance from the axis of rotation with the first radial distance greater than the second radial distance; a radial distance from the surface to the axis of rotation decreases as the surface extends in a direction away from the second end portion of the strap, such that with the second end portion of the strap in contact with the surface and slid along in contact with the surface, the second end portion of the strap resiliently bends in a direction toward the first end portion of the strap; and with the second end portion of the strap moved beyond the surface, the second end portion of the strap resiliently bends in a direction away from the first end portion of the strap placing the locking wall portion of the second end portion of the strap in abutting relationship with the latch wall portion of the second end portion of the body and positioning the strap and the body in a closed locked position, wherein, with the strap and the body in the closed locked position, the projection is positioned within the slot of the body and the tab is positioned within the slot of the strap.

An example useful for understanding the claimed clamp assembly, but which is not necessarily encompassed by the wording of the claims, includes a clamp assembly for securing wire bundles to a structure which includes a body which includes a first end portion and a second end portion having a ramp assembly having a surface and having a latch wall portion. The clamp assembly further includes a strap which includes a first end portion wherein the first end portion of the strap is pivotally coupled to the first end portion of the body to form a hinge with an axis of rotation about which the body and the strap rotate relative to one another. The strap further includes a second end portion having a locking wall portion. A radial distance from the surface to the axis of rotation decreases as the surface extends in a direction away from the second end portion of the strap such that with the second end portion of the strap in contact with the surface and slid along in contact with the surface, the second end portion of the strap resiliently bends in a direction toward the first end portion. With the second end portion moved beyond the surface, second end portion of the strap resiliently bends in a direction away from the first end portion placing the locking wall portion of the second end portion in abutting relationship with the latch wall portion of the second end portion of the body and positioning the strap and the body in a closed locked position.

An example useful for understanding the claimed clamp assembly, but which is not necessarily encompassed by the wording of the claims, includes a clamp assembly for securing wire bundles to a structure which includes a body which includes a first end portion and a second end portion of the body defines a slot. The clamp assembly includes a strap which includes a first end of a first end portion of the strap which is pivotally coupled to the first end portion of the body to form a hinge with an axis of rotation about which a second end of the first end portion of the strap and the second end portion of the body can be moved relative to one another between an open position and a closed locked position. The second end of the first end portion of the strap defines a projection. In the closed locked position the first end portion of the strap and the body define a central axis which extends between the first end portion of the strap and the body and the projection is positioned within the slot. The slot is defined by a first wall portion of the second end portion of the body and is positioned at a first radial distance from the axis of rotation and is defined by a second wall portion of the second end portion of the body positioned at a second radial distance from the axis of rotation. The first radial distance is greater than the second radial distance.

An example useful for understanding the claimed clamp assembly, but which is not necessarily encompassed by the wording of the claims, includes a clamp assembly for securing wire bundles to a structure which includes a body which includes a first end portion and a second end portion of the body defines a tab. The clamp assembly further includes a strap which includes a first end of a first end portion wherein the first end portion of the body is pivotally coupled to the first end of the first end portion of the strap to form a hinge with an axis of rotation about which a second end portion of the strap and the second end portion of the body can be moved relative to one another between an open position and a closed locked position. A second end of the first end portion of the strap defines a slot defined by a first wall portion of the second end of the first end portion of the strap and a second wall portion of the second end of the first end portion of the strap spaced apart from one another. In the closed locked position the first end portion of the strap and the body define a central axis which extends between the first end portion of the strap and the body with the tab positioned within the slot. The first wall portion and the second wall portion are spaced apart from one another in a direction transverse to a radial direction extending from the central axis.

### BRIEF SUMMARY OF THE DRAWINGS

FIG. 1 is a perspective view of an aircraft;
FIG. 2 is a top plan view of clamp assemblies securing bundled wires to a structure and routing the bundled wires within the aircraft of FIG. 1;
FIG. 3 is an enlarged partial perspective view of a clamp assembly securing bundled wires to the structure which is encircled and designated as 3 of FIG. 2;
FIG. 4 is an exploded perspective view of the clamp assembly of FIG. 3 without the bundled wires or being secured to the structure;
FIG. 5 is perspective side elevation view of clamp assembly of FIG. 4 assembled;
FIG. 6 is the clamp assembly of FIG. 5 secured in a closed and locked position;
FIG. 7A-7C is a partial perspective cross section view along line of symmetry 7-7 of a clamp assembly as seen in FIG. 2 in which the clamp assembly in FIG. 7A is in an open position, in FIG. 7B the clamp assembly is being moved toward a closed locked position and FIG. 7C the clamp assembly is positioned in the closed locked position;
FIG. 8 is a perspective view of a cross section along line 8-8 of the clamp assembly in FIG. 6;
FIG. 9 is a cross section view along line 9-9 of the clamp assembly in FIG. 2 in a closed locked position without the wire bundle; and
FIG. 10 is an enlarged bottom perspective view of the clamp assembly of FIG. 6 with a radial and lateral reinforcement arrangements engaged with the clamp assembly in a closed locked position.

### DESCRIPTION

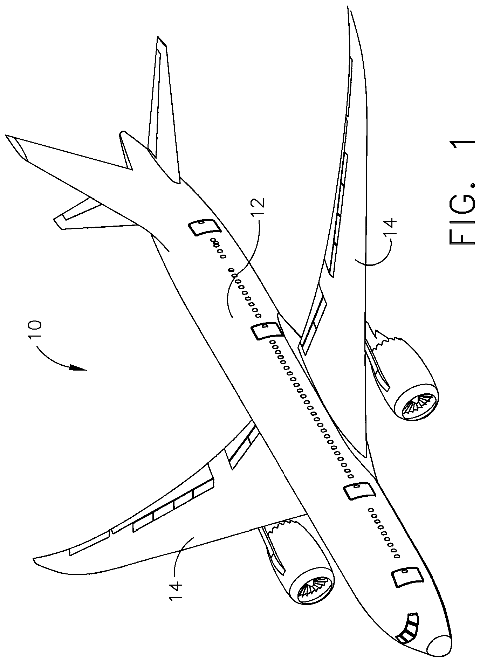

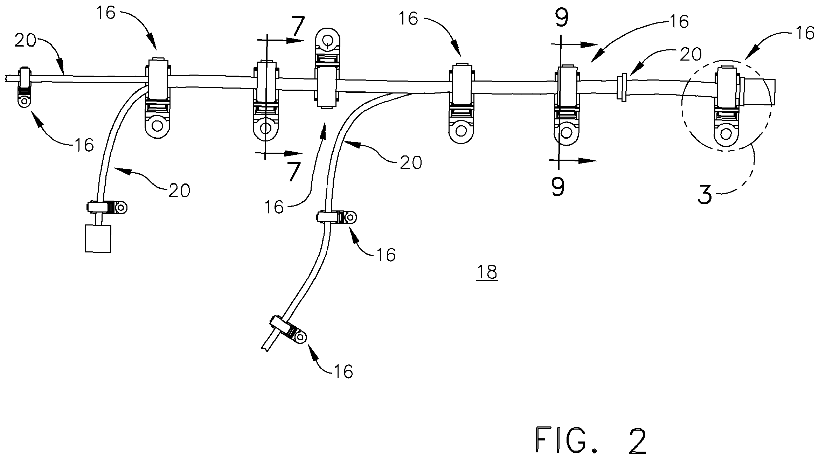

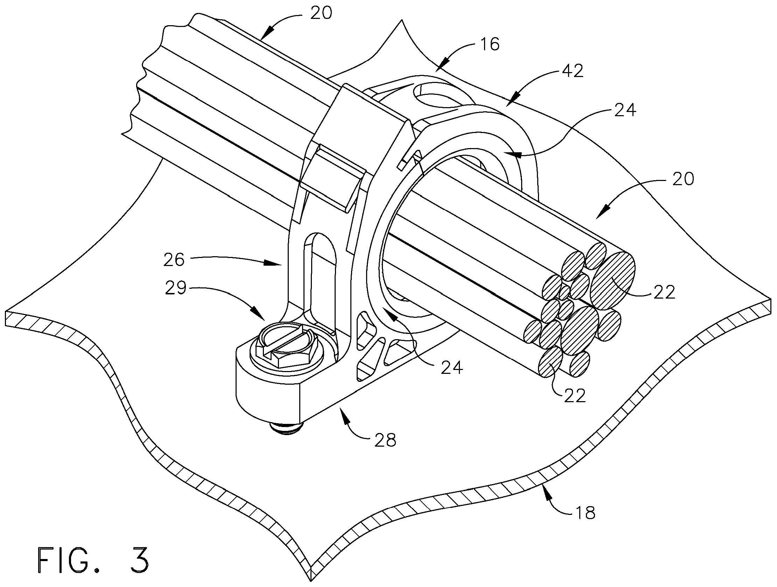

In referring to FIG. 1, aircraft 10 is shown as an example of a fabricated assembly which installs wiring during fabrication. Aircraft 10 utilizes the installation of wire bundles secured within aircraft 10 and routed to various locations within aircraft 10. Wiring bundles extend throughout many portions of aircraft 10, which require transmission of communications and/or control signals, such as for example, within fuselage 12 and wings 14. Clamp assemblies 16, as seen in FIGS. 2 and 3, are secured to structure 18 positioned within aircraft 10 and facilitate routing of wire bundles 20 throughout aircraft 10 as needed. Clamp assemblies 16 secure wire bundles 20 to structure 18 wherein the number and size of wires 22 captured by clamp assembly 16 can vary depending on the need for wiring for a particular location within aircraft 10. As a result, a scaled down version of clamp assembly 16 is employed with a smaller wire bundle 20 and a scaled up version of clamp assembly 16 is employed with a larger wire bundle 20.

It is desired to make a firm securement of wire bundles 20 to structure 18 so as to maintain wires 22 in a desired position within aircraft 10 and yet not have an overly tight securement of wire bundle 20 such that unnecessary wear or damage can be imparted to wires 22 within wire bundles 20. Making this proper accommodation of wire bundle 20 within clamp assembly is achieved with properly scaling the size of clamp assembly 16 for a particular wire bundle 20 dimension and in some instances providing a cushion such as cushion collar assembly 24 as seen in FIG. 3 which will surround wires 22 within clamp assembly 16. Cushion collar assembly 24 can provide a more snug fit for wire bundles 20 which may have a slightly smaller size dimension when positioned within clamp assembly 16 maintaining wires 22 in a desired position. Cushion collar assembly 24 can also provide a protective cushioned fit to wire bundles 20 that may have a slightly larger size dimension when positioned within clamp assembly 16.

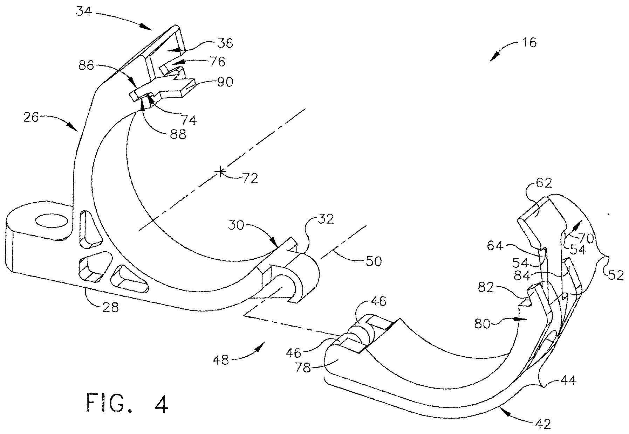

In referring to FIGS. 4-6, clamp assembly 16 for securing wire bundles 20 to structure 18 within aircraft 10 is shown. Clamp assembly 16 is constructed from one of a wide range of materials nonconductive thermoplastic polymer for example such as polyetheretherketone, polyaryletherketone, polyphenylene, amorphous thermoplastic polyetherimide, heat stabilized Nylon or other suitable materials. Clamp assembly 16 includes body 26 which includes first side 28 for positioning body 26 onto structure 18 for securement of clamp assembly 16 to structure 18, as seen in FIGS. 2 and 3. Securement can be accomplished utilizing one of a wide variety of fasteners. In this example bolt 29 is employed to secure clamp assembly to structure 18.

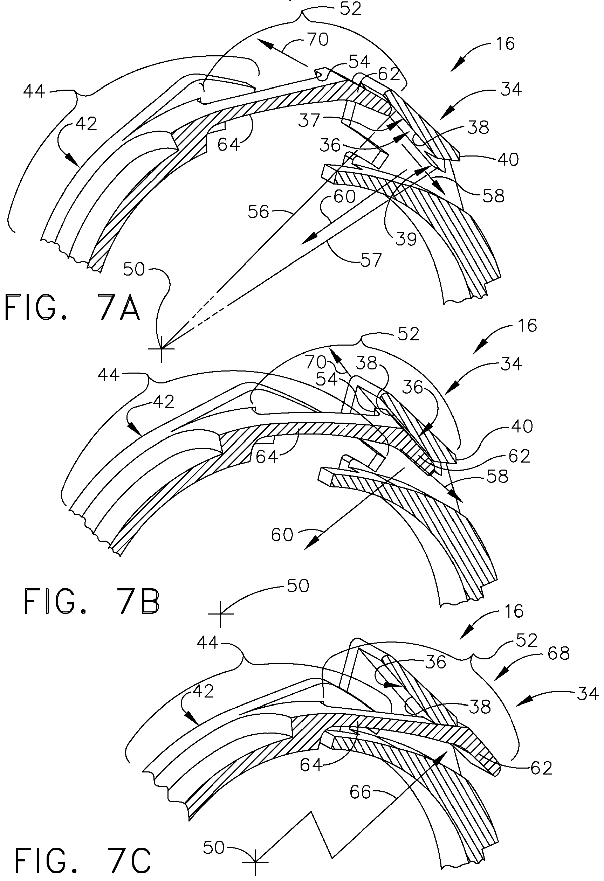

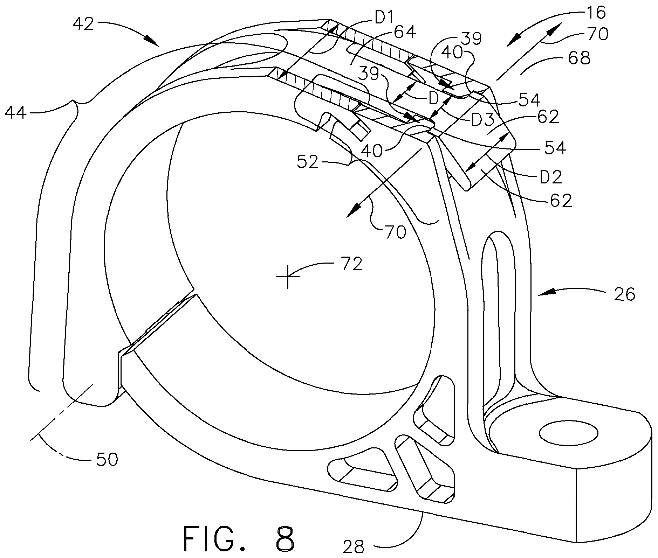

Clamp assembly 16 includes, as mentioned above, body 26 which includes first end portion 30 and second end portion 34 of body 26 has ramp assembly 36, as seen in FIGS. 7A-7C having surface 38. In addition, ramp assembly 36 has latch wall portion 40, as seen in FIGS 7A, 7B and 8. Clamp assembly 16 further includes strap 42 which includes first end portion 44 wherein first end portion 44 of the strap is pivotally coupled to first end portion 30 of body 26 to form hinge 48 with an axis of rotation 50 about which body 26 and strap 42 rotate relative to one another. In this example, first end portion 30 of body 26, as seen in FIG. 4, has hinge flange 32 and first end portion 44 of strap 42 has hinge pin 46, wherein hinge pin 46 is shown having a two component spaced apart hinge pin 46. This arrangement of body 26 and strap 42 having hinge 48 engagement provides the installer ease in moving clamp assembly 16 between open and closed locked positions for positioning wire bundle 20 within clamp assembly 16 and capturing wire bundle 20 within clamp assembly 16 with moving strap 42 and body 26 relative to one another into a closed locked position, which will be discussed in further detail, securing wire bundle 20 within clamp assembly 16, with clamp assembly 16, in this example, secured to structure 18.

Strap 42, of clamp assembly 16, further includes second end portion 52 having locking wall portion 54 as seen in FIGS. 4, 5 and 8. Locking wall portion 54 is defined by head 62, of second end portion 52 which will be discussed herein in more detail, and is positioned on opposing sides of leg member 64 and extends in direction 70 away from leg member 64. Radial distance 56, as seen in FIG. 7A, from surface 38 of ramp assembly 36 to axis of rotation 50 decreases as surface 38 extends in direction 58 away from second end portion 52 of strap 42 to a lesser radial distance 57 than that of radial distance 56. As a result of surface 38 configuration decreasing in distance from axis of rotation 50 as surface 38 extends in direction 58, second end portion 52 of strap 42 in contact with surface 38 is slid along in contact with the surface 38, as seen in FIGS. 7A and 7B, which results in second end portion 52 of strap resiliently bending in direction 60 toward first end portion 44.

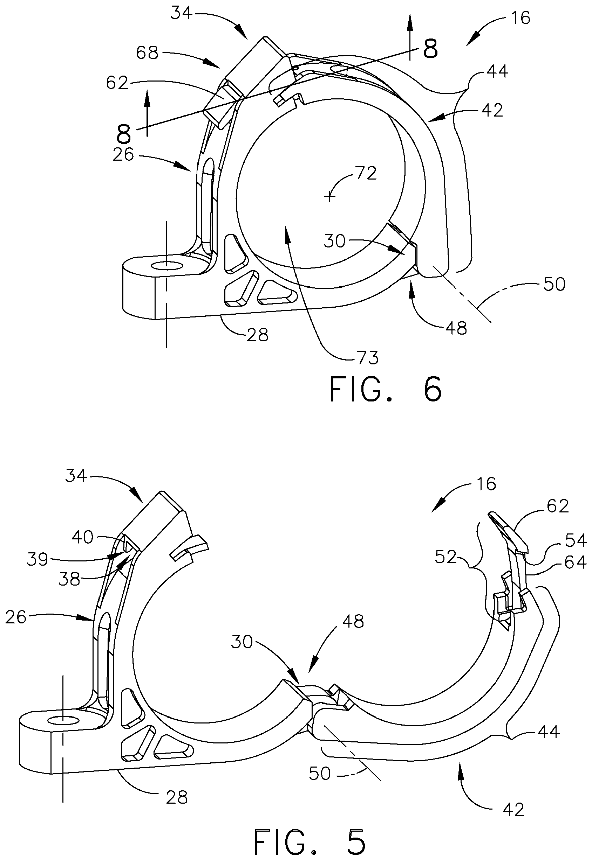

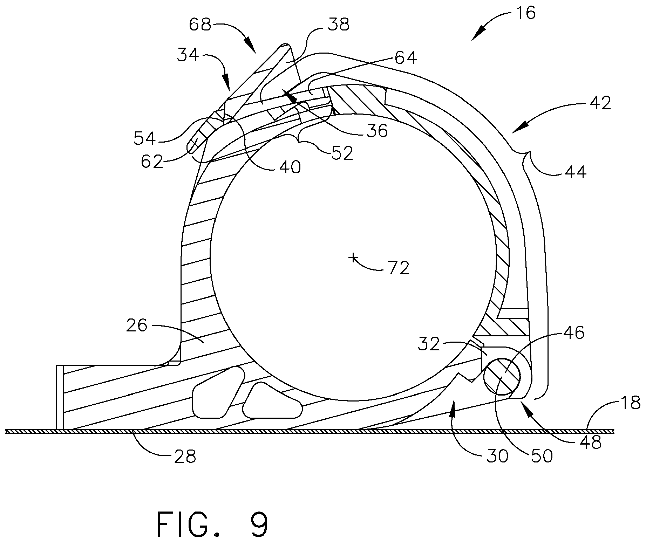

Second end portion 52, in this example, includes head 62 and leg member 64 wherein head 62 is connected to first end portion 44 of strap 42 with leg member 64. With second end portion 52 moved beyond surface 38, which in this example, includes moving head 62, as seen in FIG. 7C, beyond surface 38, which includes beyond surface 38 which extends along tab extension 39, as seen in FIG. 5, which extend from main section 37, as seen in FIG. 7A, of ramp assembly 36. Two spaced apart tab extensions 39 of ramp assembly 36, as seen in FIG. 8, are, as mentioned above, spaced apart from each other and both include surface 38 extending along each tab extension 39 upon which head 62 slides. Once head 62 slides beyond and loses contact with surface 38 of both tab extensions 39 of ramp assembly 36, surface 38 no longer provides resistance to resiliently bent second end portion 52 and leg member 64 along with head 62 bends back in direction 66 away from first end portion 44 of strap 42, as seen in FIG. 7C, placing locking wall portion 54, defined by head 62, as seen in FIGS. 4 and 8, of second end portion 52, in abutting relationship with the latch wall portion 40, as seen in FIGS. 5 and 8, positioned on tab extensions 39 of ramp assembly 36 of second end portion 34 of body 26. With locking wall portion 54 and latch wall portion 40 in abutting position, strap 42 and body 26 are positioned in closed locked position 68, as seen in FIGS. 6 and 8-10. With leg member 64 and head 62 flexing back in direction 66 and locking wall portion 54 and latch wall portion 40 are in abutting position, first end portion 44 and second end portion 52 are in tension which further secures the closed locked position 68 with locking wall portion 54 with a tension force component from locking wall portion 54 pushing against latch wall portion 40. In addition, with strap 42 and body 26 in closed locked position 68, strap 42 and body 26 define central axis 72, as seen in FIGS. 4, 6, 8-10, which extends between strap 42 and body 26.

This placing of locking wall portion 54 in abutting relationship with latch wall portion 40 is facilitated with dimension relationships of leg member 64, head 62 and first end portion 44 of strap 42. Leg member 64 has a width dimension D less than width dimension D1 of first end portion 44 of strap 42 which provides leg member 64 greater flexibility relative to first end portion 44 of strap 42 to facilitate resiliently bending of leg member 64 as head 62 travels along surface 38 of ramp assembly 36 and resiliently bending in an opposite direction when head 62 travels beyond surface 38 of tab extensions 39 of ramp assembly 36 permitting locking wall portion 54 and latch wall portion 40 to be positioned into abutting relationship. Width dimension D of leg member 64 is also less than width dimension D2 of head 62 such that with head 62 traveling beyond surface 38 of spaced apart tab extensions 39, head 62 is permitted to move locking wall portion 54 into abutting relationship with latch wall portion 40 with leg member 64 having width dimension D less than distance D3 between tab extensions 39 as seen in FIG. 8. This configuration provides for easy locking for the installer of clamp assembly 16 with the simple bending of leg member 64 and head 62 of second end portion 52 of strap 42 without the use of a tool. Once clamp assembly 16 has been engaged into the closed locked position 68 clamp assembly 16 is reliably captures and secures wire bundle 20. Should the installer need to open clamp assembly 16, the installer simply slides by hand locking wall portion 54 out of abutting relationship with latch wall portion 40 allowing installer to simply slide second end portion 52 of strap 42 away from second end portion 34 of body 26 opening clamp assembly 16 without the need for use of a tool.

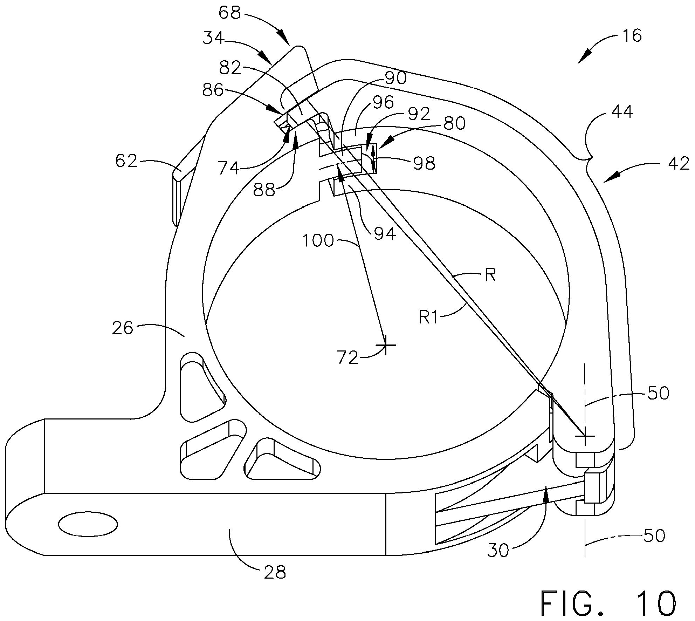

In referring to FIGS. 4 and 10, clamp assembly 16 includes first end portion 30 and second end portion 34 of body 26 defines slot 74 and in this example, second slot 76. Second slot 76 is positioned spaced apart from slot 74, as seen in FIG. 4. Strap 42 includes first end 78 of a first end portion 44 which is pivotally coupled to first end portion 30 of body 26 to form hinge 48 with axis of rotation 50 about which second end 80 of first end portion 44 of strap 42 and second end portion 34 of body 26 can be moved relative to one another about axis of rotation 50 between an open position as seen in FIG. 5 and closed locked position 68, as seen in FIG. 6.

Second end 80 of first end portion 44 of strap 42 defines projection 82 and in this example, second end 80 defines second projection 84 spaced apart from projection 82. In closed locked position 68 as seen in FIG. 10, first end portion 44 of strap 42 and the body 26 define central axis 72 which extends between first end portion 44 of strap 42 and body 26 and projection 82 is positioned within slot 74 and similarly (not shown) second projection 84 is positioned within second slot 76.

Second slot 76 is similarly configured and constructed as slot 74. Slot 74 is defined by first wall portion 86 of second end portion 34 of body 26 as seen in FIG. 10 and is positioned at a first radial distance R from the axis of rotation 50 and is defined by second wall portion 88 of second end portion 34 of body 26 positioned at second radial distance R1 from the axis of rotation 50. First radial distance R is greater than second radial distance R1 providing radial restraint of projection 82 between first wall portion 86 and second wall portion 88. With second slot 76 having a similar construction as slot 74, second slot 76 also provides radial restraint of second projection 84. Slot 74 and second slot 76 provide confinement for projection 82 and second projection 84, respectively, thereby providing radial reinforcement for strap 42 and facilitating maintaining a circular opening 73, as seen in FIG. 6, configuration for this example of clamp assembly 16. The radial reinforcement resists radial force applied to first end portion 44 of strap 42 with capturing a larger dimensioned wire bundle 20 which applies a force against first end portion 44 with wire bundle captured in clamp assembly 16 with clamp assembly positioned in closed locked position 68. The radial reinforcement resists the force applied by a larger sized wire bundle 20 and facilitates maintaining the circular opening 73, in this example, and conforming wiring installation to requirements or regulations which call for sustaining the shape of clamp assembly 16 in closed locked position 68.

Clamp assembly 16 includes, as mentioned earlier, body 26 which includes first end portion 30, as seen in FIG. 4, and second end portion 34 of body 26 defines tab 90. Strap 42 includes first end 78 of first end portion 44 which is pivotally coupled to first end portion 30 of body 26 to form hinge 48 with axis of rotation 50 about which second end 80 of first end portion 44 of strap 42 and second end portion 34 of body 26 can be moved relative to one another about axis of rotation 50 between an open position, as seen in FIG. 5, and closed locked position 68, as seen in FIG. 6.

As seen in FIG. 10, second end 80 of first end portion 44 of strap 42 defines slot 92 defined by first wall portion 94 of second end 80 of first end portion 44 of strap 42 and second wall portion 96 of second end 80 of first end portion 44 of strap 42 spaced apart from one another. In closed locked position 68, first end portion 44 of strap 42 and body 26 define central axis 72 which extends between first end portion 44 of strap 42 and tab 90 is positioned within slot 92. First wall portion 94 and second wall portion 96 are spaced apart from one another in direction 98 transverse to radial direction 100 extending from central axis 72. With tab 90 positioned between first wall portion 94 and second wall portion 96, first end portion 44 of strap 42 is provided lateral reinforcement in resisting any forces applied to clamp assembly 16 in a direction along which wire bundle 20 extends through clamp assembly 16. This lateral reinforcement facilitates maintaining, in this example, circular opening 73 configuration, as seen in FIG. 6, and facilitates conforming to wiring requirements or regulations for sustaining clamp assembly 16 shape such as in this example circular opening 73 shape.

Further, the disclosure comprises the following examples useful for understanding the claimed clamp assembly, but which are not necessarily encompassed by the wording of the claims:
In one example, a clamp assembly (16) for securing wire bundles (20) to a structure (18) comprises: a body (26) comprising: a first end portion (30); and a second end portion (34) having a ramp assembly (36) having a surface (38) and a latch wall portion (40); and a strap (42) comprising: a first end portion (44) wherein the first end portion (44) of the strap (42) is pivotally coupled to the first end portion (44) of the body (26) to form a hinge (48) with an axis of rotation (50) about which the body (26) and the strap (42) rotate relative to one another; a second end portion (52) having a locking wall portion (54), wherein: a radial distance (56) from the surface (38) to the axis of rotation (50) decreases as the surface (38) extends in a direction (58) away from the second end portion (52) of the strap (42), such that with the second end portion (52) of the strap in contact with the surface (38) and slid along in contact with the surface (38), the second end portion (52) of the strap (42) resiliently bends in a direction (60) toward the first end portion (44); and with the second end portion (52) moved beyond the surface (38), second end portion (52) of the strap (42) resiliently bends in a direction away (66) from the first end portion (44) placing the locking wall portion (54) of the second end portion (52) in abutting relationship with the latch wall portion (40) of the second end portion (52) of the body (26) and positioning the strap (42) and the body (26) in a closed locked position (68).

The second end portion (52) of the strap (42) may further include a leg member (64) and a head (62) with the leg member(64) connecting the head (62) to the first end portion (44) of the strap (42); the leg member (64) has a width dimension (D) less than a width dimension (D1) of the first end portion (44) of the strap (42) and less than a width dimension (D2) of the head; and the locking wall portion (54) is defined by the head (62) and extends in a direction (70) away from the leg member (64).

With the strap (42) and the body (26) in the closed locked position (68), the strap (42) and the body (26) may define a central axis (72) which extends between the strap (42) and the body (26).

The second end portion (34) of the body (26) may define a slot (74).

A first end portion (44) of the strap (42) may further define a projection (82), which is positioned within the slot (74), with the strap (42) and the body (26) in the closed locked position (68), wherein the slot (74) is defined by a first wall portion (86) of the second end portion (34) of the body (26) positioned at a first radial (R) distance from the axis of rotation (50) and a second wall portion (88) of the second end portion (34) of the body (26) positioned at a second radial distance (R1) from the axis of rotation (50) with the first radial distance (R) greater than the second radial distance (R1).

The second end portion (34) of the body (26) may further define a tab (90).

The first end portion (44) of the strap (42) may define a slot (92), with a first wall portion (94) of the first end portion (44) of the strap (42) and a second wall portion (96) of the first end portion (44) of the strap (42) spaced apart from one another in a direction (98) transverse to a radial direction (100) extending from a central axis (72) which extends between the strap (42) and the body (26) and with the strap (42) and the body (26) in the closed locked position (68), the tab (90) is positioned within the slot (92).

In one example, a clamp assembly (16) for securing wire bundles (20) to a structure (18) comprises: a body (26) comprising: a first end portion (30); and a second end portion (34) of the body (26) defines a slot (74); and a strap (42) comprising: a first end (78)of a first end portion (44) of the strap (42) which is pivotally coupled to the first end portion (30) of the body (26) to form a hinge (48) with an axis of rotation (50) about which a second end (80) of the first end portion (44) of the strap (42) and the second end portion (34) of the body (26) can be moved relative to one another between an open position and a closed locked position (68), wherein: the second end (80) of the first end portion (44) of the strap (42) defines a projection (82); in the closed locked position (68) the first end portion (44) of the strap (42) and the body (26) define a central axis(72) which extends between the first end portion (44) of the strap (42) and the body (26) and the projection (82) is positioned within the slot (74), wherein: the slot (74) is defined by a first wall portion (86) of the second end portion (34) of the body (26) and is positioned at a first radial distance (R) from the axis of rotation (50) and is defined by a second wall portion (88) of the second end portion (34) of the body (26) positioned at a second radial distance (R1) from the axis of rotation (50); and the first radial distance (R) is greater than the second radial distance (R1).

The strap (42) may further comprise a second end portion (52) which includes a leg member (64) which connects a head (62) to the first end portion (44) of the strap (42).

The second end portion (34) of the body (26) may further include a ramp assembly (36) having a surface (38) and a latch wall portion (40); and the head (62) of the second end portion (52) of the strap (42) has a locking wall portion (54).

A radial distance (R) from the surface (38) to the axis of rotation (50) may decrease as the surface (38) extends in a direction (58) away from the second end portion (52) of the strap (42) such that, with the head (62) of the second end portion (52) of the strap (42) in contact the surface (38) and is slid along in contact with the surface (38), the second end portion (52) of the strap (42) resiliently bends in a direction (60) toward the first end portion (44).

With the second end portion (52) moved beyond the surface (38), second end portion (52) of the strap (42) may resiliently bend in a direction (66) away from the first end portion (44) placing the locking wall portion (54) of the head (62) of the second end portion (52) of the strap (42) in abutting relationship with the latch wall portion (40) of the second end portion (34) of the body (26), placing the strap (42) and the body (26) in the closed locked position (68).

The clamp assembly may further include a slot (92) defined by a first wall portion (94) of the second end (80) of the first end portion (44) of the strap (42) and a second wall portion (96) of the second end (80) of the first end portion (44) of the strap (42) spaced apart from one another and the second end portion (34) of the body (26) defines a tab (90).

The first wall portion (94) and the second wall portion (96) may be spaced apart from one another in a direction (98) transverse to a radial direction (100) extending from the central axis (72), such that with the strap (42) and body (26) in the closed locked position (68), the tab (90) is positioned within the slot (92).

In one example, a clamp assembly (16) for securing wire bundles (20) to a structure (18) comprises: a body (26) comprising: a first end portion (30); and a second end portion (34) of the body (26) defines a tab (90); and a strap (42) comprising: a first end (78) of a first end portion (44) wherein the first end portion (30) of the body (26) is pivotally coupled to the first end (78) of the first end portion (44) of the strap (42) to form a hinge (48) with an axis of rotation (50) about which a second end portion (52) of the strap (42) and the second end portion (34) of the body (26) can be moved relative to one another between an open position and a closed locked position (68); a second end (80) of the first end portion (44) of the strap (42) defines a slot (92) defined by a first wall portion (94) of the second end (80) of the first end portion (44) of the strap (42) and a second wall portion (96) of the second end (80) of the first end portion (44) of the strap (42) spaced apart from one another; in the closed locked position (68) the first end portion (44) of the strap (42) and the body (26) define a central axis (72) which extends between the first end portion (44) of the strap (42) and the body (26) with the tab (90) positioned within the slot (92); and the first wall portion (94) and the second wall portion (96) are spaced apart from one another in a direction (8) transverse to a radial direction (100) extending from the central axis (72).

The second end portion (52) may include a leg member (64) which connects a head (62) to the first end portion (44) of the strap (42); the second end portion (34) of the body (26) further includes a ramp assembly (36) having a surface (38) and a latch wall portion (40); and the head (62) of the second end portion (52) of the strap (42) has a locking wall portion (54).

A radial distance (R) from the surface (38) to the axis of rotation (50) may decrease as the surface (38) extends in a direction (58) away from the second end portion (52) of the strap (42) such that with the head (62) of the second end portion (52) of the strap (42) in contact with the surface (38) and is slid along in contact with the surface (38), the head (62) and the leg member (64) of the second end portion (52) of the strap (42) resiliently bend in a direction (60) toward the first end portion (44).

With the head (62) of the second end portion (52) of the strap (42) moved beyond the surface (38), the head (62) and the leg member (64) of the second end portion (52) of the strap (42) may resiliently bend in a direction (66) away from the first end portion (44) positioning the locking wall portion (54) of the head (62) of the second end portion (52) of the strap (42) in abutting relationship with the latch wall portion (40) of the second end portion (34) of the body (26), placing the strap (42) and the body (26) in the closed locked position (68).

The second end portion (34) of the body (26) may define a slot (74).

The second end (80) of the first end portion (44) of the strap (42) may further define a projection (82) positioned within the slot (74) of the second end portion (34) of the body (26) in the closed locked position (68), wherein: the slot (74) is defined by a first wall portion (86) of the second end portion (34) of the body (26) positioned at a first radial distance (R) from the axis of rotation (50); and the slot (74) is defined by a second wall portion (88) of the second end portion (34) of the body (26) positioned at a second radial distance (R1) from the axis of rotation (50) with the first radial distance (R) greater than the second radial distance (R1).

The second end portion (52) of the strap (42) may include a leg member (64) which connects a head (62) to the first end portion (44) of the strap (42); the second end portion (34) of the body (26) further includes a ramp assembly (36) having a surface (38) and a latch wall portion (40); and the head (62) of the second end portion (52) of the strap (42) has a locking wall portion (54).

A radial distance (R) from the surface (38) to the axis of rotation (50) may decrease as the surface (38) extends in a direction (58) away from the second end portion (52) of the strap (42) such that with the head (62) of the second end portion (52) of the strap (42) in contact with the surface (38) and is slid along in contact with the surface (38), the head (62) and the leg member (64) of the second end portion (52) of the strap (42) resiliently bend in a direction (60) toward the first end portion (44) of the strap (42).

With the head (62) of the second end portion (52) of the strap (42) moved beyond the surface (38), the head (62) and the leg member (64) of the second end portion (52) of the strap (42) may resiliently bend in a direction (66) away from the first end portion (44) of the strap (42) positioning the locking wall portion (54) of the head (62) of the second end portion (52) of the strap (42) in abutting relationship with the latch wall portion (40) of the second end portion (34) of the body (26), placing the strap (42) and the body (26) in the closed locked position (68).

The second end portion (34) of the body (26) may define a slot (74); the second end (80) of the first end portion (44) of the strap (42) further defines a projection (82) positioned within the slot (74) of the second end portion (34) of the body (26) in the closed locked position (68); the slot (74) of the second end portion (34) of the body (26) is defined by a first wall portion (86) of the second end portion (34) of the body (26) positioned at a first radial distance (R) from the axis of rotation (50); and the slot (74) of the second end portion (34) of the body (26) is defined by a second wall portion (88) of the second end portion (34) of the body (26) positioned at a second radial distance (R1) from the axis of rotation (50) with the first radial distance (R) greater than the second radial distance (R1).

In one example, an aircraft (10) comprises a clamp assembly of any of the examples above.

While various examples have been described above, this disclosure is not intended to be limited thereto. Variations can be made to the disclosed examples as long as they are still within the scope of the appended claims.

## Claims

1. A clamp assembly (16) for securing wire bundles (20) to a structure (18), comprising:
a body (26) comprising:
a first end portion (30) of the body (26); and
a second end portion (34) of the body (26) having a ramp assembly (36) having a surface (38) comprising two spaced apart tab extensions (39) defining a latch wall portion (40), wherein the second end portion (34) of the body (26) defines:
a slot (74); and
a tab (90); and
a strap (42) comprising:
a first end portion (44) of the strap (42), wherein the first end portion (44) of the strap (42) is pivotally coupled to the first end portion (30) of the body (26) to form a hinge (48) with an axis of rotation (50) about which the body (26) and the strap (42) rotate relative to one another, wherein the first end portion (44) of the strap (42) defines:
a projection (82); and
a slot (92), with a first wall portion (94) of the first end portion (44) of the strap (42) and a second wall portion (96) of the first end portion (44) of the strap (42) spaced apart from one another in a direction (98) transverse to a radial direction (100) extending from a central axis (72) which extends between the strap (42) and the body (26); and
a second end portion (52) of the strap (42) having:
a leg member (64) and a head (62) with the leg member (64) connecting the head (62) to the first end portion (44) of the strap (42), wherein the leg member (64) has a width dimension (D) less than a width dimension (D1) of the first end portion (44) of the strap (42) and less than a width dimension (D2) of the head (62); and
a locking wall portion (54) defined by the head (62) and extending in a direction (70) away from the leg member (64), wherein:
the slot (74) defined by the second end portion (34) of the body (26) is defined by a first wall portion (86) of the second end portion (34) of the body (26) positioned at a first radial distance (R) from the axis of rotation (50) and a second wall portion (88) of the second end portion (34) of the body (26) positioned at a second radial distance (R1) from the axis of rotation (50) with the first radial distance (R) greater than the second radial distance (R1);
a radial distance (56) from the surface (38) to the axis of rotation (50) decreases as the surface (38) extends in a direction (58) away from the second end portion (52) of the strap (42), such that with the second end portion (52) of the strap (42) in contact with the surface (38) and slid along in contact with the surface (38), the second end portion (52) of the strap (42) resiliently bends in a direction (60) toward the first end portion (44) of the strap (42); and
with the second end portion (52) of the strap (42) moved beyond the surface (38), the second end portion (52) of the strap (42) resiliently bends in a direction away (66) from the first end portion (44) of the strap (42) placing the locking wall portion (54) of the second end portion (52) of the strap (42) in abutting relationship with the latch wall portion (40) of the second end portion (52) of the body (26) and positioning the strap (42) and the body (26) in a closed locked position (68), wherein, with the strap (42) and the body (26) in the closed locked position (68), the projection (82) of the strap (42) is positioned within the slot (74) of the body (26) and the tab (90) of the body (26) is positioned within the slot (92) of the strap (42).

2. The clamp assembly (16) of claim 1, wherein the first end portion (30) of the body (26) has a hinge flange (32), and the first end portion (44) of the strap (42) has a hinge pin (46), and wherein the hinge (48) is defined by the hinge flange (32) and the hinge pin (46).

3. The clamp assembly (16) of claim 1 or 2, wherein, with the strap (42) and the body (26) in the closed locked position (68), the strap (42) and the body (26) define a central axis (72) which extends between the strap (42) and the body (26).

4. The clamp assembly (16) of claim 1, wherein the first end portion (44) of the strap (42) further defines a second projection (84) spaced apart from the projection (82).

5. The clamp assembly (16) of claim 4, wherein the first end portion (30) of the body (26) further defines a second slot (76) spaced apart from the slot (74).

6. The clamp assembly (16) of claim 5, wherein, with the strap (42) and the body (26) in the closed locked position (68), the second projection (84) is positioned within the second slot (76).

7. The clamp assembly (16) of any preceding claim, wherein the clamp assembly (16) is constructed from a nonconductive thermoplastic polymer.

8. The clamp assembly (16) of claim 7, wherein the nonconductive thermoplastic polymer is selected from polyetheretherketone or polyaryletherketone.

9. The clamp assembly (16) of claim 7, wherein the nonconductive thermoplastic polymer is polyphenylene.

10. The clamp assembly (16) of claim 7, wherein the nonconductive thermoplastic polymer is amorphous thermoplastic polyetherimide.

11. The clamp assembly (16) of claim 7, wherein the nonconductive thermoplastic polymer is heat stabilized Nylon.

12. The clamp assembly (16) of any preceding claim, wherein a first side (28) of the body (26) is configured for positioning the body (26) onto a structure (18).

13. The clamp assembly (16) of any preceding claim, wherein, with the strap (42) and the body (26) in the closed locked position (68), a circular opening (73) is provided between the body (26) and the strap (42).

14. The clamp assembly (16) of claim 13, further comprising a cushion collar assembly (24) for accommodating wire bundles (20) within the clamp assembly (16).

15. An aircraft (10) comprising the clamp assembly of any one of claims 1-14.

## Patentansprüche

1. Schellenbaugruppe (16) zum Befestigen von Drahtbündeln (20) an einer Struktur (18), mit:
einem Körper (26), umfassend:
einen ersten Endabschnitt (30) des Körpers (26); und
einen zweiten Endabschnitt (34) des Körpers (26), der eine Rampenanordnung (36) mit einer Oberfläche (38) aufweist, die zwei voneinander beabstandete Laschenverlängerungen (39) umfasst, die einen Verriegelungswandabschnitt (40) definieren, wobei der zweite Endabschnitt (34) des Körpers (26)
einen Schlitz (74) und
eine Lasche (90) definiert; und
einem Bügel (42), umfassend:
einen ersten Endabschnitt (44) des Bügels (42), wobei der erste Endabschnitt (44) des Bügels (42) schwenkbar mit dem ersten Endabschnitt (30) des Körpers (26) gekoppelt ist, um ein Scharnier (48) mit einer Drehachse (50) zu bilden, um die sich der Körper (26) und der Bügel (42) relativ zueinander drehen, wobei der erste Endabschnitt (44) des Bügels (42)
einen Vorsprung (82) und
einen Schlitz (92) definiert, wobei ein erster Wandabschnitt (94) des ersten Endabschnitts (44) des Bügels (42) und ein zweiter Wandabschnitt (96) des ersten Endabschnitts (44) des Bügels (42) in einer Richtung (98) voneinander beabstandet sind, die quer zu einer Radialrichtung (100) verläuft, die sich von einer sich zwischen dem Bügel (42) und dem Körper (26) erstreckenden zentralen Achse (72) aus erstreckt; und
einen zweiten Endabschnitt (52) des Bügels (42) mit:
einem Schenkelelement (64) und einem Kopf (62), wobei das Schenkelelement (64) den Kopf (62) mit dem ersten Endabschnitt (44) des Bügels (42) verbindet, wobei das Schenkelelement (64) eine Breitenabmessung (D) aufweist, die geringer ist als eine Breitenabmessung (D1) des ersten Endabschnitts (44) des Bügels (42) und geringer als eine Breitenabmessung (D2) des Kopfes (62); und
einem Verriegelungswandabschnitt (54), der durch den Kopf (62) definiert ist und sich in einer Richtung (70) weg von dem Schenkelelement (64) erstreckt, wobei:
der durch den zweiten Endabschnitt (34) des Körpers (26) definierte Schlitz (74) durch einen ersten Wandabschnitt (86) des zweiten Endabschnitts (34) des Körpers (26), der in einem ersten radialen Abstand (R) von der Drehachse (50) positioniert ist, und einen zweiten Wandabschnitt (88) des zweiten Endabschnitts (34) des Körpers (26), der in einem zweiten radialen Abstand (R1) von der Drehachse (50) positioniert ist, definiert ist, wobei der erste radiale Abstand (R) größer als der zweite radiale Abstand (R1) ist;
ein radialer Abstand (56) von der Oberfläche (38) zu der Drehachse (50) abnimmt, wenn sich die Oberfläche (38) in einer Richtung (58) weg von dem zweiten Endabschnitt (52) des Bügels (42) erstreckt, so dass, wenn der zweite Endabschnitt (52) des Bügels (42) in Kontakt mit der Oberfläche (38) ist und in Kontakt mit der Oberfläche (38) verschoben wird, der zweite Endabschnitt (52) des Bügels (42) sich elastisch in Richtung (60) zu dem ersten Endabschnitt (44) des Bügels (42) hin biegt; und
wenn der zweite Endabschnitt (52) des Bügels (42) über die Oberfläche (38) hinaus bewegt wird, der zweite Endabschnitt (52) des Gurtes (42) sich elastisch in einer Richtung weg (66) von dem ersten Endabschnitt (44) des Gurtes (42) biegt und den Verriegelungswandabschnitt (54) des zweiten Endabschnitts (52) des Gurtes (42) in eine anstoßende Beziehung mit dem Verriegelungswandabschnitt (40) des zweiten Endabschnitts (52) des Körpers (26) bringt und den Bügel (42) und den Körper (26) in eine geschlossene verriegelte Position (68) positioniert, wobei, wenn sich der Bügel (42) und der Körper (26) in der geschlossenen verriegelten Position (68) befinden, der Vorsprung (82) des Bügels (42) in dem Schlitz (74) des Körpers (26) angeordnet ist und die Lasche (90) des Körpers (26) in dem Schlitz (92) des Bügels (42) angeordnet ist.

2. Schellenbaugruppe (16) nach Anspruch 1, bei der der erste Endabschnitt (30) des Körpers (26) einen Scharnierflansch (32) und der erste Endabschnitt (44) des Bügels (42) einen Scharnierstift (46) aufweist, und bei der das Scharnier (48) durch den Scharnierflansch (32) und den Scharnierstift (46) definiert ist.

3. Schellenbaugruppe (16) nach Anspruch 1 oder 2, wobei bei geschlossener Verriegelungsposition (68) des Bügels (42) und des Körpers (26) der Bügel (42) und der Körper (26) eine Mittelachse (72) definieren, die sich zwischen dem Bügel (42) und dem Körper (26) erstreckt.

4. Schellenbaugruppe (16) nach Anspruch 1, bei der der erste Endabschnitt (44) des Bügels (42) ferner einen zweiten Vorsprung (84) definiert, der von dem Vorsprung (82) beabstandet ist.

5. Schellenbaugruppe (16) nach Anspruch 4, bei der der erste Endabschnitt (30) des Körpers (26) ferner einen zweiten Schlitz (76) definiert, der von dem Schlitz (74) beabstandet ist.

6. Schellenbaugruppe (16) nach Anspruch 5, bei der der zweite Vorsprung (84) in dem zweiten Schlitz (76) positioniert ist, wenn sich der Bügel (42) und der Körper (26) in der geschlossenen Verriegelungsposition (68) befinden.

7. Schellenbaugruppe (16) nach einem der vorhergehenden Ansprüche, wobei die Schellenbaugruppe (16) aus einem nichtleitenden thermoplastischen Polymer hergestellt ist.

8. Schellenbaugruppe (16) nach Anspruch 7, bei der das nichtleitende thermoplastische Polymer ausgewählt ist aus Polyetheretherketon oder Polyaryletherketon.

9. Schellenbaugruppe (16) nach Anspruch 7, bei der das nichtleitende thermoplastische Polymer Polyphenylen ist.

10. Schellenbaugruppe (16) nach Anspruch 7, wobei das nichtleitende thermoplastische Polymer amorphes thermoplastisches
Polyetherimid ist.

11. Schellenbaugruppe (16) nach Anspruch 7, bei der das nichtleitende thermoplastische Polymer hitzestabilisiertes Nylon ist.

12. Schellenbaugruppe (16) nach einem der vorhergehenden Ansprüche, bei der eine erste Seite (28) des Körpers (26) für die Positionierung des Körpers (26) an einer Struktur (18) konfiguriert ist.

13. Schellenbaugruppe (16) nach einem der vorhergehenden Ansprüche, bei der in der geschlossenen, verriegelten Position (68) des Bügels (42) und des Körpers (26) eine kreisförmige Öffnung (73) zwischen dem Körper (26) und dem Bügel (42) vorgesehen ist.

14. Schellenbaugruppe (16) nach Anspruch 13, die ferner eine Polsterkragenbaugruppe (24) zur Aufnahme von Drahtbündeln (20) innerhalb der Schellenbaugruppe (16) umfasst.

15. Flugzeug (10) mit der Schellenbaugruppe nach einem der Ansprüche 1 bis 14.

## Revendications

1. Ensemble d'agrafe (16) pour fixer des faisceaux de fils (20) à une structure (18), comprenant :
un corps (26) comprenant :
une première partie d'extrémité (30) du corps (26) ; et
une seconde partie d'extrémité (34) du corps (26) présentant un ensemble de rampe (36) présentant une surface (38) comprenant deux extensions de languette espacées (39) définissant une partie de paroi de verrouillage (40), dans lequel la seconde partie d'extrémité (34) du corps (26) définit :
une fente (74) ; et
une languette (90) ; et
une sangle (42), comprenant :
une première partie d'extrémité (44) de la sangle (42), dans laquelle la première partie d'extrémité (44) de la sangle (42) est couplée de manière pivotante à la première partie d'extrémité (30) du corps (26) pour former une articulation (48) avec un axe de rotation (50) autour duquel le corps (26) et la sangle (42) tournent l'un par rapport à l'autre, dans lequel la première partie d'extrémité (44) de la sangle (42) définit :
une saillie (82) ; et
une fente (92), avec une première partie de paroi (94) de la première partie d'extrémité (44) de la sangle (42) et une seconde partie de paroi (96) de la première partie d'extrémité (44) de la sangle (42) espacées l'une de l'autre dans une direction (98) transversale à une direction radiale (100) s'étendant à partir d'un axe central (72) qui s'étend entre la sangle (42) et le corps (26) ; et
une seconde partie d'extrémité (52) de la sangle (42) présentant :
un élément de jambe (64) et une tête (62), l'élément de jambe (64) reliant la tête (62) à la première partie d'extrémité (44) de la sangle (42), dans lequel l'élément de jambe (64) présente une dimension de largeur (D) inférieure à une dimension de largeur (D1) de la première partie d'extrémité (44) de la sangle (42) et inférieure à une dimension de largeur (D2) de la tête (62) ; et
une partie de paroi de verrouillage (54) définie par la tête (62) et s'étendant dans une direction (70) s'éloignant de l'élément de jambe (64), dans lequel :
la fente (74) définie par la seconde partie d'extrémité (34) du corps (26) est définie par une première partie de paroi (86) de la seconde partie d'extrémité (34) du corps (26) positionnée à une première distance radiale (R) de l'axe de rotation (50) et une seconde partie de paroi (88) de la seconde partie d'extrémité (34) du corps (26) positionnée à une seconde distance radiale (R1) de l'axe de rotation (50), la première distance radiale (R) étant supérieure à la seconde distance radiale (R1) ;
une distance radiale (56) allant de la surface (38) jusqu'à l'axe de rotation (50) diminue lorsque la surface (38) s'étend dans une direction (58) s'éloignant de la seconde partie d'extrémité (52) de la sangle (42), de telle sorte que lorsque la seconde partie d'extrémité (52) de la sangle (42) est en contact avec la surface (38) et coulisse le long de la surface (38) en contact avec celle-ci, la seconde partie d'extrémité (52) de la sangle (42) fléchit de manière élastique dans une direction (60) vers la première partie d'extrémité (44) de la sangle (42) ; et
avec la seconde partie d'extrémité (52) de la sangle (42) déplacée au-delà de la surface (38), la seconde partie d'extrémité (52) de la sangle (42) fléchit de manière élastique dans une direction (66) s'éloignant de la première partie d'extrémité (44) de la sangle (42) en plaçant la partie de paroi de verrouillage (54) de la seconde partie d'extrémité (52) de la sangle (42) en relation de butée avec la partie de paroi de verrouillage (40) de la seconde partie d'extrémité (52) du corps (26) et en positionnant la sangle (42) et le corps (26) dans une position verrouillée fermée (68), dans lequel, avec la sangle (42) et le corps (26) dans la position verrouillée fermée (68), la saillie (82) de la sangle (42) est positionnée à l'intérieur de la fente (74) du corps (26) et la languette (90) du corps (26) est positionnée à l'intérieur de la fente (92) de la sangle (42).

2. Ensemble d'agrafe (16) selon la revendication 1, dans lequel la première partie d'extrémité (30) du corps (26) présente une bride d'articulation (32), et la première partie d'extrémité (44) de la sangle (42) présente une broche d'articulation (46), et dans lequel l'articulation (48) est définie par la bride d'articulation (32) et la broche d'articulation (46).

3. Ensemble d'agrafe (16) selon la revendication 1 ou 2, dans lequel, avec la sangle (42) et le corps (26) dans la position verrouillée fermée (68), la sangle (42) et le corps (26) définissent un axe central (72) qui s'étend entre la sangle (42) et le corps (26).

4. Ensemble d'agrafe (16) selon la revendication 1, dans lequel la première partie d'extrémité (44) de la sangle (42) définit en outre une seconde saillie (84) espacée de la saillie (82).

5. Ensemble d'agrafe (16) selon la revendication 4, dans lequel la première partie d'extrémité (30) du corps (26) définit en outre une seconde fente (76) espacée de la fente (74).

6. Ensemble d'agrafe (16) selon la revendication 5, dans lequel, avec la sangle (42) et le corps (26) dans la position verrouillée fermée (68), la seconde saillie (84) est positionnée à l'intérieur de la seconde fente (76).

7. Ensemble d'agrafe (16) selon l'une quelconque des revendications précédentes, dans lequel l'ensemble d'agrafe (16) est construit à partir d'un polymère thermoplastique non conducteur.

8. Ensemble d'agrafe (16) selon la revendication 7, dans lequel le polymère thermoplastique non conducteur est choisi parmi la polyétheréthercétone ou la polyaryléthercétone.

9. Ensemble d'agrafe (16) selon la revendication 7, dans lequel le polymère thermoplastique non conducteur est du polyphénylène.

10. Ensemble d'agrafe (16) selon la revendication 7, dans lequel le polymère thermoplastique non conducteur est un polyétherimide thermoplastique amorphe.

11. Ensemble d'agrafe (16) selon la revendication 7, dans lequel le polymère thermoplastique non conducteur est du nylon stabilisé à la chaleur.

12. Ensemble d'agrafe (16) selon l'une quelconque des revendications précédentes, dans lequel un premier côté (28) du corps (26) est configuré pour positionner le corps (26) sur une structure (18).

13. Ensemble d'agrafe (16) selon l'une quelconque des revendications précédentes, dans lequel, avec la sangle (42) et le corps (26) dans la position verrouillée fermée (68), une ouverture circulaire (73) est prévue entre le corps (26) et la sangle (42).

14. Ensemble d'agrafe (16) selon la revendication 13, comprenant en outre un ensemble de collier d'amortissement (24) pour recevoir des faisceaux de fils (20) à l'intérieur de l'ensemble d'agrafe (16).

15. Aéronef (10) comprenant l'ensemble d'agrafe selon l'une quelconque des revendications 1 à 14.
